# EUROPÄISCHE PATENTSCHRIFT

(11) **EP 1 046 000 B1**
(45) Veröffentlichungstag und Bekanntmachung des Hinweises auf die Patenterteilung: **23.04.2003**
(21) Anmeldenummer: 99944269.2
(22) Anmeldetag: 02.07.1999
(51) Int. Cl.: F16H 57/02, B60J 7/057

(54) **VORRICHTUNG ZUM BEWEGEN EINES TEILS, INSBESONDERE IN EINEM KRAFTFAHRZEUG, MIT EINEM VERSTELLMECHANISMUS**
DEVICE FOR MOVING A PART, ESPECIALLY IN A MOTOR VEHICLE, SAID DEVICE HAVING AN ADJUSTING MECHANISM
DISPOSITIF POUR DEPLACER UNE PIECE, NOTAMMENT DANS UN VEHICULE A MOTEUR, COMPORTANT UN MECANISME DE REGLAGE

(30) Priorität: 13.10.1998 DE 19847016
(43) Veröffentlichungstag der Anmeldung: 25.10.2000
(73) Patentinhaber: ROBERT BOSCH GMBH, 70442 Stuttgart (DE)
(72) Erfinder: FRIEDMANN, Artur, D-77839 Lichtenau (DE); STEUER, Peter, D-76149 Karlsruhe (DE); BOELL, Stefan, D-88636 Illmensee (DE)
(86) Internationale Anmeldenummer: DE9902047
(87) Internationale Veröffentlichungsnummer: WO00022322

(56) Entgegenhaltungen:
- EP-A- 0 469 286
- EP-A- 0 795 699
- DE-U- 9 311 960
- US-A- 2 966 069
- US-A- 4 274 293
- US-A- 4 561 691

## Beschreibung

### Stand der Technik

Die Erfindung betrifft eine Vorrichtung zum Bewegen eines Teils, insbesondere in einem Kraftfahrzeug, mit einem Verstellmechanismus nach der Gattung des Hauptanspruchs.

Solche Vorrichtungen sind allgemein bekannt, wobei die mechanischen Komponenten in zunehmendem Maße durch elektromotorische Komponenten ergänzt werden. Damit lassen sich beispielsweise Schiebedächer in Kraftfahrzeugen elektrisch öffnen und schließen, wobei dies in der Regel mit Hilfe eines Getriebemotors geschieht, der über eine Steigwendel an das Schiebedach angekoppelt ist. Bei den hierzu bekannten Lösungen erfolgt die Ankopplung des Getriebemotors an die Steigwendel über ein Zahnrad, welches fest mit der Getriebeeinheit verbunden ist und die Steigwendel antreibt. Zur Montage muß das auf der Getriebeeinheit sitzende Zahnrad mit der im Kraftfahrzeug bereits eingebauten Steigwendel in Eingriff gebracht werden, was oft schwierig zu handhaben und mit unvermeidlichen und nicht erwünschten Toleranzen verbunden ist. Es können beispielsweise Verkippungen oder axiale Versetzungen auftreten, die zu einer Verschlechterung des Verzahnungseingriffes führen. Damit ist oft auch eine unerwünschte und störende Geräuschentwicklung verbunden.

Auch bei anderen Systemen, bei denen ein elektromotorischer Verstellmechanismus mit beweglichen, noch zu montierenden Teilen einerseits und karosseriefesten, vormontierten Teilen andererseits zusammenwirken muß, sind derartige Probleme bekannt.

Mit der gattungsgemäßen US-A-4,274,293 ist eine Sitzverstellvorrichtung bekannt geworden, bei der ein motorischer Antrieb mit einem Getriebegehäuse und einer aus diesem ragenden Antriebsspindel 26 an einer Führungsschiene befestigt ist. An einer zweiten Schiene, die relativ zur ersten beweglich angeordnet ist, ist ein Gewindeblock 30 gelagert, in dessen durchgehende Gewindebohrung die Antriebsspindel greift. Wird der Verstellantrieb betätigt, schraubt sich die Gewindespindel durch den Gewindeblock, wodurch die beiden Schienen relativ zueinander bewegt werden.

Die EP-A-0 795 699 zeigt einen Schiebedachantrieb, bei dem verschiedene Bauteile mittels Vibrationsdämpfungselementen gelagert sind, um eine Geräuschbildung des Antriebs zu verhindern.

Mit der EP-A-0 469 286 ist eine Antriebsvorrichtung für ein verstellbares Teil eines Fahrzeugs bekannt geworden, bei dem ein Schneckengetriebe ein Antriebsritzel antreibt, das wiederum mit dem verstellbaren Teil in Antriebsverbindung steht.

Die US-A-4,561,691 beschreibt ebenfalls einen Schiebedachantrieb mit einer Sicherheitsabschaltung. Hierbei wird über ein Schneckengetriebe sowohl ein Schaltrad als auch eine Steigwendel des Schiebedachs angetrieben.

Mit der DE 93 11 960 U ist eine Verstellvorrichtung bekannt geworden, bei der ein Schneckengetriebe eine Gewindehülse antreibt, die mit einer Gewindespindel kämmt. Hierbei sind alle Getriebeteile in einem kompakten Getriebegehäuse gelagert.

Die US-A-2,966,069 zeigt eine Getriebeeinheit, insbesondere für Sitzverstellungen, bei der die Drehbewegung eines Getriebeteils in eine lineare Bewegung anderer Getriebeelemente umgewandelt wird.

### Vorteile der Erfindung

Die erfindungsgemäße Vorrichtung mit den Merkmalen des Anspruchs 1 bzw. 2 hat den Vorteil, daß die Zuordnung von Abtriebsteil zu dem zu bewegenden Teil verbessert wird, was zu einer erhöhten Laufruhe und einer damit verbundenen Geräuschreduzierung sowie einer Verschleißminimierung führt.

Durch die getrennte Lagerung des sonst üblicherweise auf einem Getriebeglied angeordneten Abtriebsteiles lassen sich die Eingriffsverhältnisse optimieren. Wegen des definierten Einbaus beispielsweise in einen karosseriefesten Rahmen kann das Abtriebsteil mit sehr geringen Toleranzen an das zu bewegende Teil angepaßt werden. Dies betrifft sowohl Toleranzen, die im wesentlichen auf Lagerspiele, Rundlaufabweichungen und Exzentrizitäten zurückzuführen sind, als auch Toleranzen hinsichtlich der axialen Zuordnung des Abtriebsteiles zu dem zu bewegenden Teil, die hauptsächlich montagetechnisch bedingt sind.

Darüberhinaus wird die Montage bzw. der Aus- und Einbau des Motors oder des Getriebes bei einer nötigen Reparatur wesentlich erleichtert, weil das Abtriebsteil mit dem zu bewegenden Teil in Verbindung bleiben kann.

Erfindungsgemäß erfolgt die Ankopplung des Abtriebsteiles an ein Getriebeglied über eine Vertiefung, die im Abtriebsteil ausgeformt ist. Die Vertiefung ist bezüglich ihrer Geometrie gemäß einer variante ein Mehrkant-Profil. Entscheidend ist nur, daß eine formschlüssige Verbindung zu einem zur Vertiefung korrespondierenden Ansatz hergestellt wird, der an dem der Vertiefung zugewandten Ende des Getriebeglieds mit entsprechender Geometrie angeformt ist.

Zur Ankopplung des Abtriebsteiles an das Getriebeglied kann auch umgekehrt die Vertiefung am Getriebeglied und der Ansatz am Abtriebsglied ausgebildet sein. Diese Umkehrung ändert nichts an dem beschriebenen Prinzip der Ankopplung.

In einer Variante der Erfindung ist ein ballig ausgeführter Ansatz vorgesehen. So sind leichte, montagebedingte Verkippungen zur Achse des Getriebegliedes relativ zur Achse des Abtriebsteils möglich, ohne daß dies zu einer Verschlechterung des Eingriffsverhaltens führt.

Durch die in den Unteransprüchen angegebenen Maßnahmen sind vorteilhafte Weiterbildungen der Vorrichtung nach den Ansprüchen 1 bzw. 2 möglich.

Wenn das zu bewegende Teil ein Schiebedach eines Kraftfahrzeuges ist, welches mit dem Abtriebsteil über eine Steigwendel wirkverbunden ist, und ferner das Abtriebsteil durch ein Zahnrad gebildet wird, das die Steigwendel antreibt und mit gegenläufig bewegbaren Abschnitten der Steigwendel in Eingriff steht, dann erhält man alle der bisher beschriebenen Vorteile auch bei einer speziellen Vorrichtung zum Öffnen und Schließen eines Schiebedaches. Dabei ist vorteilhaft, wenn das mit der Steigwendel in Eingriff stehende Zahnrad auf seiner der Verbindungsstelle abgewandten Seite von einem Federblech gehalten und von diesem gegen eine Lagerbuchse gedrückt wird, die ihrerseits in einem karosseriefesten Dachrahmen gehalten wird. Dadurch erhält man nicht nur eine optimale Fixierung des Zahnrades in der Lagerbuchse sondern gleichzeitig auch eine sehr einfache Montagemöglichkeit.

Die Lagerbuchse wird in einer Öffnung des Dachrahmens gehalten, deren Mittelpunkt idealerweise genau gleiche Abstände zu zwei die Steigwendel führenden Wänden des Dachrahmens aufweist. Damit wird sichergestellt, daß die Lagerbuchse und das darin gelagerte Zahnrad mit jeweils gleichem Abstand zu sich gegenläufig bewegbaren Steigwendelabschnitten angeordnet ist.

In einer weiteren vorteilhaften Ausgestaltung weist das Federblech einen Kragen auf, der eine Seitenfläche eines konzentrischen Ansatzes an der der Verbindungsstelle abgewandten Seite des Zahnrades umfaßt. Dadurch wird das Federblech relativ zum Zahnrad fixiert. Wenn weiterhin das Federblech mit seinen äußeren Randbereichen die beiden Abschnitte der Steigwendel quer zu ihrer Laufrichtung teilweise umfaßt, dann ist auch eine Führung und Fixierung dieser Steigwendelabschnitte relativ zum Zahnrad gewährleistet.

Durch geeignete Materialwahl für das Federblech kann auf spezifische Verhältnisse am Einbauort reagiert werden. So minimiert der Einsatz von gehärtetem Stahlblech den Verschleiß während Leichtmetalle zur Gewichtsreduzierung beitragen.

Vorteilhaft ist außerdem die Anordnung eines elastischen Elements zwischen dem Ansatz und der Vertiefung. Durch dieses Element, welches beispielsweise aus einem weichen Kunststoff oder einem gummiähnlichen Material gefertigt ist, kann eine akustische Entkopplung erreicht werden. Das elastische Element kann in Form eines Überzugs auf den Ansatz aufgebracht werden, so daß nach wie vor eine direkte Verbindung zwischen Ansatz und Vertiefung besteht. Vorstellbar ist aber auch eine indirekte Verbindung über ein entsprechend geformtes, elastisches Zwischenglied, welches zwischen Ansatz und Vertiefung angeordnet ist.

Durch die Trennung von Abtriebsteil und Getriebe in der beschriebenen Weise lassen sich auch andere Maßnahmen zur akustischen Entkopplung des Motors von entsprechenden Karosserieteilen besser realisieren. Wenn die komplette Getriebeeinheit an elastischen Entkopplungselementen aufgehängt wird, dann kann die Motor-Getriebeeinheit bedingt durch die elastische Aufhängung Bewegungen relativ zu den Karosserieteilen ausführen. Diese Bewegungen wirken sich dann jedoch nicht negativ auf das Eingriffsverhalten des Abtriebsteiles in das zu bewegende Teil aus, da das Abtriebsteil dem entsprechenden Karosserieteil fest zugeordnet bleibt.

Es versteht sich, daß der Einsatz der erfindungsgemäßen Vorrichtung nicht nur auf Schiebedächer beschränkt ist. Sie kann bei allen Verstellproblematiken im Kraftfahrzeugbereich genutzt werden, beispielsweise bei elektrischen Fensterhebern, Sitzverstellungen, Zuziehhilfen für verschiedenste Karosserieöffnungen wie Kofferraumdeckel und Motorhaube oder auch Scheinwerfer- und Lenkradverstellungen.

Zeichnung

In der Zeichnung sind zwei Ausführungsbeispiele einer erfindungsgemäßen Vorrichtung dargestellt und in der nachfolgenden Beschreibung näher erläutert.

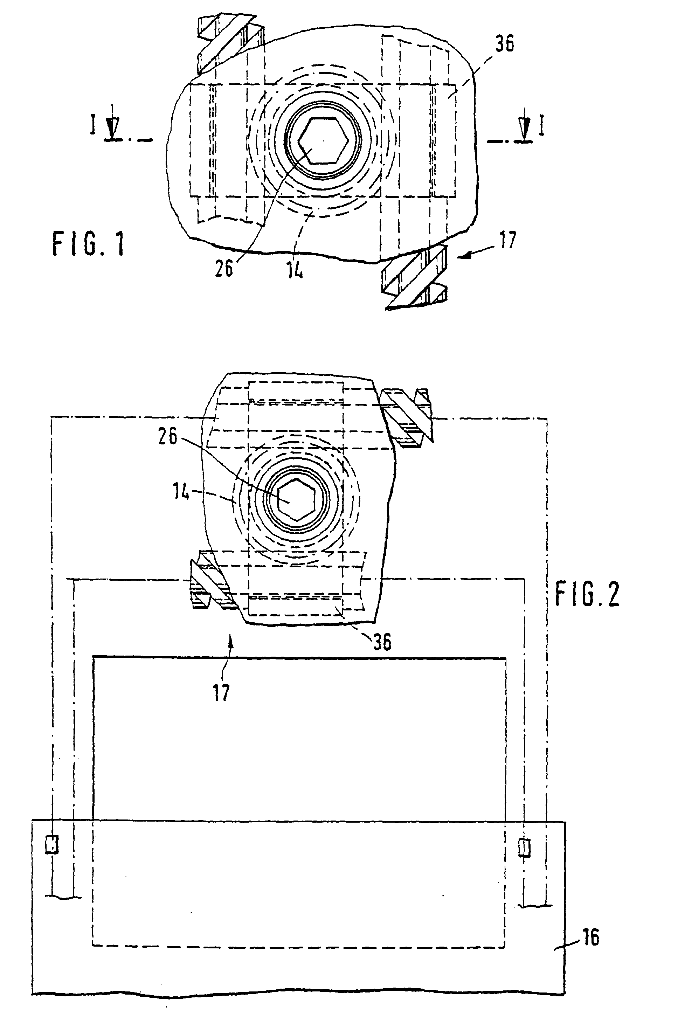

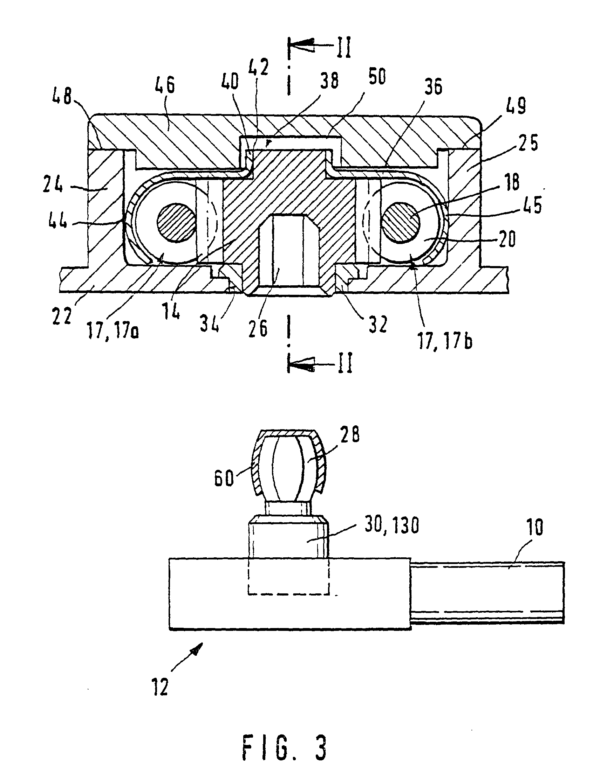

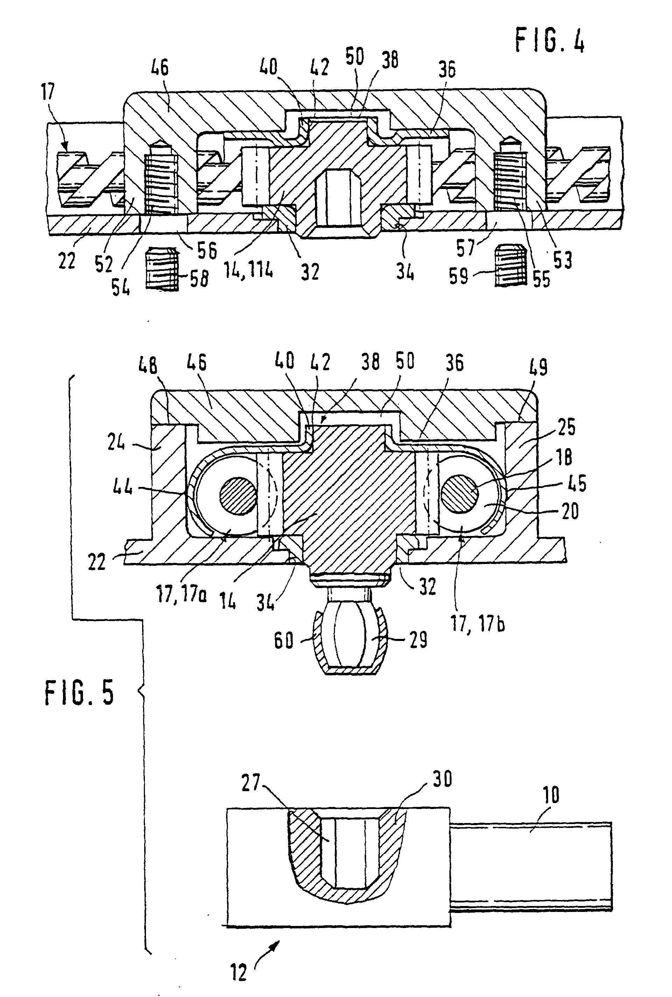

Es zeigen Figur 1 ein Ausführungsbeispiel in Draufsicht von oben, Figur 2 eine schematische und erweiterte Darstellung von Figur 1, Figur 3 einen Schnitt entlang der Linie I-I aus Figur 1, Figur 4 einen Schnitt entlang der Linie II-II aus Figur 3 und Figur 5 ein zweites Ausführungsbeispiel in derselben Ansicht wie Figur 3.

### Beschreibung der Ausführungsbeispiele

Das in den Figuren 1 bis 3 dargestellte Ausführungsbeispiel zeigt einen Teil einer erfindungsgemäßen Vorrichtung zum Bewegen eines Teils, insbesondere in einem Kraftfahrzeug, mit einem Verstellmechanismus, wobei sich das Ausführungsbeispiel speziell auf eine Vorrichtung zum Öffnen und Schließen eines Schiebedaches 16 bezieht.

Die Vorrichtung umfaßt einen Verstellmechanismus mit einem Motor 10, einem Getriebe 12 und einem Abtriebsteil 14, das mit dem zu bewegenden Teil 16 verbunden ist. Das Abtriebsteil wird durch ein Zahnrad 14 gebildet und das zu bewegende Teil ist ein Schiebedach 16, das mit dem Abtriebsteil 14 über eine Steigwendel 17 wirkverbunden ist.

Die Steigwendel 17 besteht aus einem biegsamen Stahlseil 18, welches die Zugkräfte aufnimmt, die beim Öffnen und Schließen des Schiebedaches 16 auftreten. Dieses Stahlseil 18 ist umgeben von einer spiralförmigen Wendel 20, in die das Zahnrad 14 an zwei sich gegenüberliegenden Stellen zum Eingriff kommt. Die Steigwendel 17 und das Zahnrad 14 sind in einem Dachrahmen 22 gelagert, welcher einem karosseriefesten Dachsystem zugeordnet ist.

Der Dachrahmen 22, der aus einem vorzugsweise leichten und stabilen Material, beispielsweise aus Aluminium besteht, weist zwei Führungswände 24, 25 auf. Innerhalb des von den Führungswänden 24, 25 aufgespannten Raumes wird zwischen jeweils der linken Führungswand 24 und dem Zahnrad 14, beziehungsweise der rechten Führungswand 25 und dem Zahnrad 14 die Steigwendel 17 geführt. Durch diese Anordnung und die Drehung des Zahnrades 14 erreicht man eine gegenläufige Bewegung zweier Abschnitte 17a und 17b der Steigwendel 17.

Das Zahnrad 14 weist an seinem dem Getriebe 12 zugewandten Ende eine Vertiefung 26 auf, in die ein vorzugsweise ballig geformter Ansatz 28, der an einem Getriebeglied 30 angeformt ist, formschlüssig einsetzbar ist, wobei das Getriebeglied 30 in dem dargestellten Ausführungsbeispiel durch eine Getriebewelle 130 gebildet wird.

Im Unterschied zum ersten Ausführungsbeispiel weist das Zahnrad 14 des zweiten Ausführungsbeispiels aus Figur 5 keine Vertiefung, sondern einen ebenfalls vorzugsweise ballig ausgeführten Ansatz 29 auf. Dieser Ansatz 29 ist formschlüssig in eine Vertiefung 27 des Getriebegliedes 30 einsetzbar.

Das Zahnrad 14 wird in beiden Ausführungsbeispielen in einer Lagerbuchse 32 gelagert. Diese Lagerbuchse 32 wird in einer Öffnung 34 des Dachrahmens 22 gehalten. Die Öffnung 34 ist so angeordnet, daß ihr Mittelpunkt einen jeweils gleichen Abstand zu den Führungswänden 24, 25 aufweist.

An seiner oberen Seite wird das Zahnrad 14 von einem Federblech 36, welches vorzugsweise aus gehärtetem Stahlblech gefertigt ist, gegen die Lagerbuchse 32 gedrückt und in ihr gehalten. Das Federblech 36 weist eine Öffnung 38 auf, die mit einem die Öffnung 38 umlaufenden Kragen 40 versehen ist. Die Innenfläche dieses Kragens 40 steht mit der Seitenfläche eines konzentrischen Ansatzes 42 des Zahnrades 14 in Kontakt, wodurch das Federblech 36 relativ zum Zahnrad 14 fixiert wird.

Weiterhin ist das Federblech 36 so ausgeführt, daß es mit seinen äußeren Randbereichen 44, 45 die Steigwendel 17 quer zu ihrer Laufrichtung teilweise umfaßt. Damit erhält man im Eingriffsbereich eine Fixierung und Führung der Steigwendel 17 relativ zum Zahnrad 14.

Das Federblech 36 sowie das Zahnrad 14 wird von einem Befestigungselement 46 in Richtung der Lagerbuchse 32 gedrückt und so gehalten. Es liegt mit zwei Absätzen 48 und 49 auf den Führungswänden 24 und 25 auf und weist im Zentrum eine Vertiefung 50 auf, in die der Kragen 40 des Federblechs 36 und der Ansatz 42 des Zahnrades 14 ragt.

Weiterhin sind in Längsrichtung bzw. in Bewegungsrichtung der Steigwendel 17 laut Figur 4 an den beiden Enden des Befestigungselementes 46 zwei Wände 52 und 53 angeformt, die jeweils mindestens eine mit einem Gewinde versehene Bohrung 54 und 55 aufweisen und im montierten Zustand koaxial über entsprechenden Bohrungen 56 und 57 des Dachrahmens 22 zu liegen kommen. Mit mindestens zwei einem Motorgehäuse zugeordneten Schrauben 58 und 59, die durch die Bohrungen 56, 57 in die Gewindebohrungen 54, 55 geschraubt werden, wird der Verstellmechanismus zusammengebaut und in sich fixiert.

Bei beiden Ausführungsbeispielen der Figuren 3 und 5 ist der Ansatz 28 bzw. 29 mit einem elastischen Element 60 zur akustischen Entkopplung überzogen.

Die Steigung der Steigwendel 17 kann - anders als in den Ausführungsbeispielen dargestellt - geringer sein. Außerdem besteht die Möglichkeit, die Windungen als einzelne Ringe auszuführen.

Die erfindungsgemäße Vorrichtung ist nicht auf Schiebedachantriebe beschränkt. So kann z.B. bei einem Fensterheberantrieb die Getriebewelle 130 in den mit einer Fensterscheibe gekoppelten Antriebsmechanismus eingreifen. Auch bei Verstellsystemen wie der Sitzverstellung kann die erfindungsgemäße Vorrichtung eingesetzt werden. Hierbei kann beispielsweise eine Antriebsspindel in eine Vertiefung im Getriebe des Antriebsmotors eingreifen.

## Patentansprüche

1. Vorrichtung zum Bewegen eines Teils, insbesondere in einem Kraftfahrzeug, mit einem Verstellmechanismus, der einen Motor (10), ein Getriebe (12) mit mindestens einem Getriebeglied (30) und wenigstens ein Abtriebsteil (14) aufweist, das mit dem zu bewegenden Teil (16) wirkverbunden und getrennt vom Getriebe (12) gelagert ist, **dadurch gekennzeichnet, daß** entweder das Abtriebsteil (14) eine Vertiefung (26) und das Getriebeglied (30) einen zu der Vertiefung (26) korrespondierenden Ansatz (28) oder das Abtriebsteil (14) einen Ansatz (29) und das Getriebeglied (30) eine zum Ansatz (29) korrespondierende Vertiefung (27) aufweist, wobei der Ansatz (28, 29) ballig geformt ist.

2. Vorrichtung zum Bewegen eines Teils, insbesondere in einem Kraftfahrzeug, mit einem Verstellmechanismus, der einen Motor (10), ein Getriebe (12) mit mindestens einem Getriebeglied (30) und wenigstens ein Abtriebsteil (14) aufweist, das mit dem zu bewegenden Teil (16) wirkverbunden und getrennt vom Getriebe (12) gelagert ist, **dadurch gekennzeichnet, daß** entweder das Abtriebsteil (14) eine Vertiefung (26) und das Getriebeglied (30) einen zu der Vertiefung (26) korrespondierenden Ansatz (28) oder das Abtriebsteil (14) einen Ansatz (29) und das Getriebeglied (30) eine zum Ansatz (29) korrespondierende Vertiefung (27) aufweist, wobei die Vertiefung (26, 27) ein Mehrkant-Profil aufweist.

3. Vorrichtung nach einem der Ansprüche 1 oder 2, **dadurch gekennzeichnet, dass** das zu bewegende Teil ein Schiebedach (16) ist, das mit dem Antriebsteil (14) über eine Steigwendel (17) in Verbindung steht.

4. Vorrichtung nach Anspruch 3, **dadurch gekennzeichnet, dass** das Antriebsteil ein Zahnrad (14) ist, das die Steigwendel (17) antreibt und mit gegenläufig bewegbaren Abschnitten (17a, 17b) der Steigwendel (17) in Eingriff steht.

5. Vorrichtung nach Anspruch 4, **dadurch gekennzeichnet, dass** Zahnrad (14) von einem Federblech (36) gehalten und gegen eine in einer Öffnung (34) eines Dachrahmens (22) gehaltenen Lagerbuchse (32) gedrückt wird.

6. Vorrichtung nach Anspruch 5, **dadurch gekennzeichnet, dass** ds Federblech (36) eine Öffnung (38) mit einem die Öffnung (38) umlaufenden Kragen (40) aufweist.

7. Vorrichtung nach Anspruch 5 und 6, **dadurch gekennzeichnet, dass** das Federblech (36) die Steigwendel (17) quer zu ihrer Laufrichtung teilweise umfasst.

8. Vorrichtung nach einem der vorhergehenden Ansprüche, **dadurch gekennzeichnet, dass** ein elastisches Element (60) zwischen dem Getriebeglied (30) und dem Abtriebsteil (14) angeordnet ist.

## Claims

1. Device for moving a part, in particular in a motor vehicle, having an adjustment mechanism which has a motor (10), a gear (12) having at least one gear element (30), and at least one output part (14) which is operatively connected to the part (16) to be moved and is mounted separately from the gear (12), **characterized in that** either the output part (14) has a depression (26) and the gear element (30) has a projection (28) corresponding with the depression (26) or the output part (14) has a projection (29) and the gear element (30) has a depression (27) corresponding with the projection (29), the projection (28, 29) being of spherical shape.

2. Device for moving a part, in particular in a motor vehicle, having an adjustment mechanism which has a motor (10), a gear (12) having at least one gear element (30), and at least one output part (14) which is operatively connected to the part (16) to be moved and is mounted separately from the gear (12), **characterized in that** either the output part (14) has a depression (26) and the gear element (30) has a projection (28) corresponding with the depression (26) or the output part (14) has a projection (29) and the gear element (30) has a depression (27) corresponding with the projection (29), the depression (26, 27) having a polygonal profile.

3. Device according to either of Claims 1 and 2, **characterized in that** the part to be moved is a sliding roof (16) which is connected to the output part (14) via a lifting coil (17).

4. Device according to Claim 3, **characterized in that** the driving part is a gear wheel (14) which drives the lifting coil (17) and is in engagement with sections (17a, 17b) of the lifting coil (17), which sections can be moved in an opposed manner.

5. Device according to Claim 4, **characterized in that** the gear wheel (14) is held by a spring plate (36) and is pressed against a bearing bushing (32) held in an opening (34) of a roof frame (22).

6. Device according to Claim 5, **characterized in that** the spring plate (36) has an opening (38) with a collar (40) encircling the opening (38).

7. Device according to Claims 5 and 6, **characterized in that** the spring plate (36) partially surrounds the lifting coil (17) transversely with respect to its running direction.

8. Device according to one of the preceding claims, **characterized in that** an elastic element (60) is arranged between the gear element (30) and the output part (14).

## Revendications

1. Dispositif pour déplacer une pièce, notamment dans un véhicule à moteur, comportant un mécanisme de réglage présentant un moteur (10), une transmission (12) avec au moins un organe de transmission (30) et au moins une partie de sortie (14) qui est en interaction avec la partie à déplacer (16) et montée séparée de la transmission (12),
**caractérisé en ce que**
soit la partie de sortie (14) présente une cavité (26) et l'organe de transmission (30) un appendice (28) correspondant à cette cavité (26),
soit la partie (14) comporte un appendice (29) et l'organe de transmission (30) présente une cavité (27) correspondant à l'appendice (29) pour déplacer une pièce, l'appendice (28, 29) ayant une forme bombée.

2. Dispositif pour déplacer une pièce, notamment dans un véhicule à moteur, comportant un mécanisme de réglage présentant un moteur (10), une transmission (12) avec au moins un organe de transmission (30) et au moins une partie de sortie (14) qui est en interaction avec la partie à déplacer (16) et montée séparée de la transmission (12),
**caractérisé en ce que**
soit la partie de sortie (14) présente une cavité (26) et l'organe de transmission (30) un appendice (28) correspondant à cette cavité (26),
soit la partie (14) comporte un appendice (29) et l'organe de transmission (30) présente une cavité (27), correspondant à l'appendice (29), pour déplacer une pièce, la cavité (26, 27) présentant un profil multipans.

3. Dispositif selon la revendication 1 ou 2,
**caractérisé en ce que**
la partie à déplacer est un toit coulissant (16), relié à la partie d'entraînement (14) par un câble hélicoïdal (17).

4. Dispositif selon la revendication 3,
**caractérisé en ce que**
la partie d'entraînement est un pignon (14) qui entraîne le câble hélicoïdal (17), en étant en prise avec des sections (17a, 17b) de ce câble qui se déplacent en sens contraires.

5. Dispositif selon la revendication 4,
**caractérisé en ce que**
le pignon est maintenu par une tôle élastique (36) qui l'applique contre une douille de palier (32) maintenue dans une ouverture (34) d'un cadre de toit (22).

6. Dispositif selon la revendication 5,
**caractérisé en ce que**
la tôle élastique (36) présente une ouverture (38) entourée par un collet (40).

7. Dispositif selon les revendications 5 et 6,
**caractérisé en ce que**
la tôle élastique (36) entoure le câble hélicoïdal (17) perpendiculairement à la direction de déplacement de celui-ci.

8. Dispositif selon une des revendications précédentes,
**caractérisé en ce que**
un élément élastique (60) est monté entre l'organe de transmission (30) et la partie de sortie (14).
